# FASCICULE DE BREVET EUROPEEN

(11) **EP 2 265 681 B1**
(45) Date de publication et mention de la délivrance du brevet: **28.12.2016**
(21) Numéro de dépôt: 09745927.5
(22) Date de dépôt: 14.04.2009
(51) Int. Cl.: C09J 5/06, C09J 11/06, C09J 11/08, B01J 13/02

(54) **COMPOSITION STABLE DESTINEE A L'ASSEMBLAGE DEMONTABLE DE SUBSTRATS PAR COLLAGE**
STABILE ZUSAMMENSETZUNG ZUR VORÜBERGEHENDEN SYNTHESE VON SUBSTRATEN DURCH LEIMUNG
STABLE COMPOSITION FOR THE DETACHABLE ASSEMBLING OF SUBSTRATES BY GLUING

(30) Priorité: 15.04.2008 FR 0852504
(43) Date de publication de la demande: 29.12.2010
(73) Titulaire: Rescoll, 33600 Pessac (FR)
(72) Inventeur: PAPON, Eric, F-33350 Saint Magne De Castillon (FR); ALCORTA, José, F-33130 Begles (FR); OLIVE, Maxime, F-33400 Talence (FR)
(74) Mandataire: Aquinov
(86) Numéro de dépôt international: PCT/FR2009/050683
(87) Numéro de publication internationale: WO 2009/138608

(56) Documents cités:
- EP-A- 1 813 630
- FR-A- 2 877 349
- US-A1- 2006 219 350
- DATABASE WPI Week 199431 Thomson Scientific, London, GB; AN 1994-253056 XP002512427 & JP 6 184504 A (NITTO DENKO CORP) 5 juillet 1994 (1994-07-05)
- DATABASE WPI Week 198812 Thomson Scientific, London, GB; AN 1988-079933 XP002585954 & JP 63 025663 A (TOYO INK MFG CO) 3 février 1988 (1988-02-03)

## Description

La présente invention concerne une composition de formulation stable, destinée à l'assemblage démontable sur commande de substrats par collage, et à un procédé de préparation d'une telle composition.

Dans l'industrie, il existe de nombreuses compositions destinées à l'assemblage par collage parfaitement adaptées aux conditions nécessaires de résistance mécanique, de résistance aux températures subies et à de nombreux autres paramètres tant physiques que chimiques.

Ces compositions peuvent être constituées d'une base polymère adhésive et d'au moins une substance spécifique qui leur confère des caractéristiques particulières.

On connaît en particulier des compositions pour l'assemblage démontable par collage de deux substrats, qui contiennent une substance active permettant le démontage des deux substrats collés sans les dégrader et sans modifier les qualités de l'adhésif. Ces compositions sont notamment décrites dans la demande de brevet FR-2.877.349.

Toutefois, si les compositions connues donnent totale satisfaction et sont particulièrement adaptées à l'assemblage de substrats par collage, leur formulation peut présenter d'importants problèmes de stabilité.

En effet, lors du stockage de la composition avant son utilisation, ou lors de sa mise en oeuvre, la substance active a tendance à réagir avec la base polymère adhésive. La composition perd alors de son efficacité et son utilisation devient difficile.

Dans le cas par exemple des compositions décrites dans la demande de brevet FR-2.877.349, l'incorporation de la substance active dans la base polymère adhésive peut entraîner une baisse très nette du temps de stockage (« shelf-life ») ou du temps de prise (« pot-life ») de l'adhésif, qui peut se traduire par une gélification très rapide de l'adhésif dans son contenant. Par exemple, lorsque la composition est stockée dans une cartouche à l'abri de l'humidité, comme dans le cas d'un polyuréthane monocomposant, on observe une gélification de l'adhésif en moins d'une semaine.

Le document US2006/219350 décrit l'incorporation de deux types de microcapsules ayant des températures de réaction différentes. Les premières, activables à basse température, contiennent l'activateur pour l'adhésif. Les autres, activables à plus haute température, contiennent un agent d'expansion destiné à affaiblir la force d'adhésion lors du décollement.

Aussi, la présente invention vise à pallier les inconvénients des compositions adhésives existantes destinées à l'assemblage démontable de substrats par collage comprenant une base polymère et au moins une substance active, en proposant une composition qui reste stable durant le stockage et qui ne modifie pas les propriétés de l'adhésif.

A cet effet, l'invention a pour objet une composition destinée à l'assemblage démontable d'un premier substrat et d'un second substrat par collage, comprenant une base polymère adhésive et au moins une substance active, caractérisée en ce que ladite substance active est encapsulée dans au moins une particule de cire, de façon à éviter toute réaction avec la matière polymère adhésive lors du stockage de la composition ou de sa mise en oeuvre. Préférentiellement, ladite substance active est microencapsulée dans des particules de cire.

Par particule de cire on entend toute particule constituée d'une matrice de cire, matériau enrobant, contenant la substance active.

L'invention couvre aussi un procédé de préparation d'une telle composition, comprenant les étapes suivantes :
- encapsulation d'une substance active dans une matrice de cire de façon à obtenir des particules dans lesquelles est contenue ladite substance active, et
- incorporation de ladite substance active encapsulée dans une base polymère adhésive.

Préférentiellement l'encapsulation est une microencapsulation.

Par microencapsulation on entend toute technologie qui permet la préparation de microparticules individualisées, constituée d'une matrice de cire contenant une matière active.

L'invention est maintenant décrite en détail.

La composition selon l'invention comprend une base polymère adhésive et une substance active, destinée à rendre l'assemblage démontable, encapsulée dans une ou plusieurs particules de cire.

Par cire ou matrice de cire on entend toutes cires, notamment les cires de paraffines (alcanes ayant un point de fusion inférieur à 100°C) et les cires de polyoléfines en particulier de polyéthylènes (polyoléfines ayant un point de fusion pouvant aller jusqu'à 130°C).

Préférentiellement il s'agit d'une cire à base d'une ou plusieurs paraffines ou polyéthylènes.

Par substance active on entend notamment un agent d'expansion chimique.

Selon un mode de réalisation particulièrement adapté mais non limitatif, la substance active permettant le démontage est un agent migrant c'est-à-dire un agent, qui, lorsque la composition est utilisée pour former un joint entre un premier et un second substrat, est apte à migrer à au moins une des interfaces dudit joint pour générer une couche de faible cohésion. Lorsqu'on apporte de l'énergie à destination de l'agent migrant incorporé dans le joint, on provoque sa migration à l'interface dudit joint avec un autre joint ou avec un substrat, générant ainsi une couche de faible cohésion, permettant de séparer les éléments au droit de la couche de faible cohésion. Selon un mode de réalisation particulièrement adapté, cette couche de faible cohésion consiste en une poche de gaz générée par la décomposition de la substance active.

De façon préféré l'agent migrant est du p-toluènesulfonylhydrazide (PTSH) ou de l'azodicarbonamide (ADC) accélérée ou non.

La base polymère adhésive peut être par exemple un polyuréthane monocomposant réticulant avec l'humidité de l'air.

La substance active est encapsulée dans une matrice de cire. Préférentiellement la matrice de cire est à base d'une ou plusieurs paraffine(s) ou d'une ou plusieurs polyoléfine(s). Les polyoléfines peuvent notamment être choisies parmi les polyéthylènes.

Avantageusement, les cires, en particulier les paraffines et polyoléfines, présentent une faible énergie de surface, ce qui leur permet d'être hydrophobes et d'assurer une faible affinité avec les composants de la colle.

Le caractère hydrophobe permet de sécher facilement les particules formées.

La faible affinité avec les composants de la colle permet de limiter la réactivité de ces composants et d'améliorer la stabilité lors du stockage. En effet, la substance active, isolée de son environnement, ne réagit pas avec la base polymère adhésive. Les particules de cire qui encapsulent la substance active, repoussent l'adhésif ce qui évite toute réaction prématurée, tout en conservant les propriétés de la composition.

La composition peut ainsi être stockée pendant un minimum de 90 jours sans aucun risque de gélification de l'adhésif.

En outre, la matrice des particules étant en cire, elle a totalement fondu à la température d'activation de la substance encapsulée, et ne présente donc aucun obstacle à la libre expansion de la substance active pour permettre le désassemblage, contrairement à d'autres matrices polymères.

La composition selon l'invention peut être obtenue par un procédé comprenant les étapes suivantes :
- encapsulation, préférentiellement microencapsulation, d'une substance active de façon à obtenir des particules de cire dans lesquelles est contenue ladite substance active, et
- incorporation de ladite substance active encapsulée dans une base polymère adhésive.

L'encapsulation de la substance active peut être réalisée par différentes techniques connues, notamment la gélification thermique, la congélation de gouttes, la coacervation simple ou complexe, l'évaporation de solvant, la nébulisation, l'enrobage en lit fluidisé ou la sphéronisation.

Le procédé peut notamment être réalisé dans l'eau par gélification thermique avec une cire ayant une température de fusion inférieure à 95°C, comme une cire de paraffine.

Le procédé peut également être réalisé par congélation de goutte avec une cire ayant une température de fusion plus élevée que les cires utilisées dans l'eau. Ce procédé est adapté en particulier aux assemblages collés qui requièrent une résistance de plusieurs minutes voire plusieurs heures à des températures supérieures à 100°C. La congélation de goutte consiste à refroidir avec de l'air des gouttes du mélange fondu de cire et de substance active.

Selon un mode de réalisation particulièrement adapté, l'encapsulation est réalisée par gélification thermique. En particulier, le procédé d'encapsulation pour la préparation de la composition selon l'invention comprend les étapes suivantes :
- ajouter une quantité d'une substance active dans de l'eau déminéralisée chauffée,
- ajouter ensuite la même quantité de cire à l'état fondu et agiter, puis
- ajouter de l'eau déminéralisée réfrigérée et agiter jusqu'à ce que la température soit inférieure au point de fusion de la cire.

Lorsque l'on ajoute la cire, insoluble dans l'eau, elle se disperse sous forme de microgouttelettes dans lesquelles va se concentrer la substance active. Puis, lorsque le mélange est refroidi brutalement, la solidification de la cire donne des particules solides de type microsphères dans lesquelles la substance active est répandue.

Avantageusement ce procédé est facile à mettre en oeuvre en laboratoire et peut être facilement transposé à l'échelle industrielle.

On peut donner un exemple particulier non limitatif de procédé d'encapsulation pour la préparation d'une composition selon l'invention, comprenant la succession des étapes suivantes :
- chauffer de l'eau déminéralisée,
- une fois l'eau à la température de consigne, ajouter de l'ADC accélérée sous agitation et laisser agiter,
- ajouter ensuite de la paraffine, par exemple une paraffine 70-80, à l'état fondu et laisser agiter,
- ajouter de l'eau déminéralisée réfrigérée, la température du mélange devant descendre en dessous du point de fusion de la cire puis ensuite arrêter l'agitation,
- filtrer le mélange sous vide et sécher le solide avec de l'acétone pour éliminer l'eau, puis
- laisser sécher les particules à l'air.

On incorpore ensuite l'ADC accélérée encapsulée dans la paraffine, dans une composition adhésive à base de polyuréthane monocomposant, par exemple un mastique pour vitrage automobile.

Des tests ont été réalisés sur une composition selon l'invention, en comparaison à une composition de l'art antérieur.

Trois compositions sont testées :
- - *C*1 :: composition adhésive sans substance active,
- - *C*2 :: composition adhésive avec substance active non encapsulée, et
- - *C*3 :: composition adhésive avec substance active encapsulée, selon
l'invention.

Pour chaque composition, on mesure l'écoulement forcé (en g/min) avant et après vieillissement de 7 jours à 40°C. L'écoulement forcé est mesuré à une pression de 4 bars, un diamètre du trou de 4 mm et une température de 23°C.

A partir des valeurs obtenues on calcule ensuite la variation de fluidité.

Les résultats obtenus, exprimés en pourcentage de variation, sont présentés dans le tableau suivant :

| | Variation avant/après vieillissement(%) |
|---|---|
| *C*1 | 3% |
| *C*2 | 46% |
| *C*3 | < 17% |

On constate tout d'abord que la présence d'une substance active dans la composition C2 entraîne bien une très forte variation de la fluidité après 7 jours de stockage à 40°C.

Ces résultats montrent également que cette variation est considérablement diminuée avec la composition C3 selon l'invention. Avantageusement la présente invention évite ainsi une gélification prématurée de l'adhésif lors de son stockage.

## Revendications

1. Composition, destinée à l'assemblage démontable d'un premier substrat et d'un second substrat par collage, comprenant une base polymère adhésive et au moins une substance active destinée à rendre l'assemblage démontable, **caractérisée en ce que** ladite substance active est encapsulée dans au moins une particule de cire.

2. Composition selon la revendication 1, **caractérisée en ce que** la substance active est un agent migrant.

3. Composition selon la revendication 2, **caractérisée en ce que** l'agent migrant est du p-toluènesulfonylhydrazide.

4. Composition selon la revendication 2, **caractérisée en ce que** l'agent migrant est de l'azodicarbonamide.

5. Composition selon l'une des précédentes revendications, **caractérisée en ce que** la base polymère adhésive est un polyuréthane monocomposant.

6. Composition selon l'une des précédentes revendications, **caractérisée en ce que** la matrice de cire est choisie parmi les cires à base de paraffine(s).

7. Composition selon l'une des revendications 1 à 5, **caractérisée en ce que** la matrice de cire est choisie parmi les cires à base de polyoléfine(s).

8. Composition selon la revendication 7, **caractérisée en ce que** la matrice de cire est choisie parmi les cires à base de polyéthylène(s).

9. Procédé de préparation d'une composition selon l'une des revendications 1 à 8, **caractérisé en ce qu'**il comprend les étapes suivantes :
- encapsulation d'une substance active, destinée à rendre l'assemblage démontable, dans une matrice de cire de façon à obtenir des particules dans lesquelles est contenue ladite substance active, et
- incorporation de ladite substance active encapsulée dans une base polymère adhésive.

10. Procédé de préparation selon la revendication 9, **caractérisée en ce que** l'encapsulation est une microencapsulation.

11. Procédé de préparation selon la revendication 9 ou 10, **caractérisé en ce que** l'encapsulation est réalisée par gélification thermique.

12. Procédé de préparation selon la revendication 11, **caractérisé en ce que** l'encapsulation comprend les étapes suivantes :
- ajouter une quantité de substance active destinée à rendre l'assemblage démontable dans de l'eau déminéralisée chauffée,
- ajouter ensuite la même quantité de cire à l'état fondu et agiter,
- ajouter de l'eau déminéralisée réfrigérée, et agiter jusqu'à ce que la température soit inférieure au point de fusion de la cire.

13. Procédé de préparation selon la revendication 9 ou 10, **caractérisé en ce que** l'encapsulation est réalisée par congélation de gouttes, coacervation simple ou complexe, évaporation de solvant, nébulisation, enrobage en lit fluidisé ou sphéronisation.

## Patentansprüche

1. Zusammensetzung, die zu einem lösbaren Verbund eines ersten Substrats und eines zweiten Substrats durch Verkleben vorgesehen ist, und die eine adhäsive Polymerbasis und wenigstens einen Wirkstoff aufweist, der dazu vorgesehen ist, den Verbund lösbar zu machen, **dadurch gekennzeichnet, dass** der Wirkstoff in wenigstens einem Teilchen aus Wachs verkapselt ist.

2. Zusammensetzung nach Anspruch 1, **dadurch gekennzeichnet, dass** der Wirkstoff ein migrierender Wirkstoff ist.

3. Zusammensetzung nach Anspruch 2, **dadurch gekennzeichnet, dass** der migrierende Wirkstoff p-Toluenesulfonylhydrazid ist.

4. Zusammensetzung nach Anspruch 2, **dadurch gekennzeichnet, dass** der migrierende Wirkstoff Azodicarboxamid.

5. Zusammensetzung nach einem der vorhergehenden Ansprüche, **dadurch gekennzeichnet, dass** die adhäsive Polymerbasis ein Einkomponenten-Polyurethan ist.

6. Zusammensetzung nach einem der vorhergehenden Ansprüche, **dadurch gekennzeichnet, dass** die Wachsmatrix aus den Wachsen auf der Grundlage von Paraffin(en) ausgewählt ist.

7. Zusammensetzung nach einem der Ansprüche 1 bis 5, **dadurch gekennzeichnet, dass** die Wachsmatrix aus den Wachsen auf der Grundlage von Polyolefin(en) ausgewählt ist.

8. Zusammensetzung nach Anspruch 7, **dadurch gekennzeichnet, dass** die Wachsmatrix aus den Wachsen auf der Grundlage von Polyethylen(en) ausgewählt ist.

9. Verfahren zur Herstellung einer Zusammensetzung nach einem der Ansprüche 1 bis 8, **dadurch gekennzeichnet, dass** dieses die folgenden Verfahrensschritte aufweist:
- Verkapseln eines Wirkstoffs, der dazu bestimmt ist, den Verbund lösbar zu machen, in einer Wachsmatrix, um auf diese Weise Teilchen zu erhalten, in denen der Wirkstoff enthalten ist, und
- Einbringen des verkapselten Wirkstoffs in eine adhäsive Polymerbasis.

10. Verfahren zur Herstellung nach Anspruch 9, **dadurch gekennzeichnet, dass** die Verkapselung eine Mikroverkapselung ist.

11. Verfahren zur Herstellung nach Anspruch 9 oder 10, **dadurch gekennzeichnet, dass** die Verkapselung durch thermisches Gelieren bewerkstelligt wird.

12. Verfahren zur Herstellung nach Anspruch 11, **dadurch gekennzeichnet, dass** die Verkapselung die folgenden Verfahrensschritte umfasst:
- Hinzufügen einer Menge von Wirkstoff, der dazu bestimmt ist, den Verbund lösbar zu machen, zu erwärmtem entmineralisiertem Wasser,
- anschließendes Hinzufügen der gleichen Menge Wachs in geschmolzenem Zustand und Bewegen,
- Hinzufügen von gekühltem entmineralisiertem Wasser und Bewegen bis die Temperatur unterhalb der Schmelztemperatur des Wachses liegt.

13. Verfahren zur Herstellung nach Anspruch 9 oder 10, **dadurch gekennzeichnet, dass** die Verkapselung durch Einfrieren von Tropfen, einfache oder komplexe Koazervation, Verdampfung von Lösungsmitteln, Vernebelung, Umhüllung in einem sich wie ein Fluid verhaltenden Bett oder Sphäronisierung bewerkstelligt wird.

## Claims

1. Composition, designed for the detachable assembly of a first substrate and a second substrate by gluing, comprising an adhesive polymer base and at least one active substance that is designed to make the assembly detachable, **characterized in that** said active substance is encapsulated in at least one wax particle.

2. Composition according to Claim 1, wherein the active substance is a migrating agent.

3. Composition according to Claim 2, wherein the migrating agent is p-toluenesulfonylhydrazide.

4. Composition according to Claim 2, wherein the migrating agent is azodicarbonamide.

5. Composition according to one of the preceding claims, wherein the adhesive polymer base is a single-component polyurethane.

6. Composition according to one of the preceding claims, wherein the wax matrix is selected from among paraffin-based waxes.

7. Composition according to one of Claims 1 to 5, wherein the wax matrix is selected from among the polyolefin-based waxes.

8. Composition according to Claim 7, wherein the wax matrix is selected from among the polyethylene-based waxes.

9. Process for preparation of a composition according to one of Claims 1 to 8, wherein it comprises the following stages:
- Encapsulation of an active substance, designed to make the assembly detachable, in a wax matrix so as to obtain particles in which said active substance is contained, and
- Incorporation of said encapsulated active substance in an adhesive polymer base.

10. Process for preparation according to Claim 9, wherein the encapsulation is a microencapsulation.

11. Process for preparation according to Claim 9 or 10, wherein the encapsulation is implemented by thermal gelling.

12. Process for preparation according to Claim 11, wherein the encapsulation comprises the following stages:
- Adding a quantity of active substance designed to make the assembly detachable in the heated demineralized water,
- Next, adding the same quantity of wax in the molten state and stirring,
- Adding cooled demineralized water and stirring until the temperature is less than the melting point of the wax.

13. Process for preparation according to Claim 9 or 10, wherein the encapsulation is carried out by the freezing of drops, simple or complex coacervation, evaporation of solvent, nebulization, coating in a fluidized bed or spheronization.
